# EUROPÄISCHE PATENTANMELDUNG

(11) **EP 4 442 345 A1**
(43) Veröffentlichungstag der Anmeldung: **09.10.2024**
(21) Anmeldenummer: 24163731.3
(22) Anmeldetag: 15.03.2024
(51) Int. Cl.: B01D 29/13, B01D 29/58, B01D 46/24, B01D 46/64

(54) **FILTER**

(30) Priorität: 05.04.2023 DE 102023001352
(71) Anmelder: Hydac Filtertechnik GmbH, 66280 Sulzbach/Saar (DE)
(72) Erfinder: Nenno, Alexander, 66646 Marpingen (DE); Morgens, Klaus, 54293 Trier (DE); Marchlewitz, Peter, 66663 Merzig (DE)
(74) Vertreter: Bartels und Partner, Patentanwälte

(57) **Zusammenfassung**

2. Filter zur Behandlung von Fluiden, mit einem ersten Filterelement (10) und mit einem zweiten Filterelement (12), das das erste Filterelement (10) unter Bildung eines Strömungsraumes (14) mit einem vorgebbaren radialen Abstand umfasst, wobei jedes Filterelement (10, 12) ein Filtermedium (16, 18) aufweist, die bevorzugt von innen nach außen von dem Fluid in einer Durchströmungsrichtung (20) durchströmbar sind, dadurch gekennzeichnet, dass die beiden Filterelemente (10, 12) mittels einer Gewindeverbindung (22) miteinander verbunden sind.

## Beschreibung

Die Erfindung betrifft einen Filter zur Behandlung von Fluiden, mit einem ersten Filterelement und mit einem zweiten Filterelement, das das erste Filterelement unter Bildung eines Strömungsraumes mit einem vorgebbaren radialen Abstand umfasst, wobei jedes Filterelement ein Filtermedium aufweist, die von dem Fluid in einer vorgebbaren Durchströmungsrichtung durchströmbar sind.

Durch EP 3 535 041 B1 ist ein Filter bekannt, der als Austauschelement konzipiert ist, dessen als Hohlkörper ausgebildetes und sich zwischen zwei Abschlussteilen, insbesondere in Form von Endkappen, erstreckendes Filtermedium plissiert mit einzelnen Filterfalten ausgebildet ist, wobei das Filtermedium ein Filtermaterial aus Zellulose aufweist, wobei ein Partikelfilter mit einem weiteren plissierten Filtermedium vorgesehen ist, dessen Filterfalten eine größere Packungsdichte aufweisen und eine größere Faltenhöhe besitzen als die Filterfalten des einen Filtermediums aus Zellulosematerial, wobei zwischen den beiden konzentrisch zueinander angeordneten Filtermedien ein fluiddurchlässiges Stützrohr angeordnet ist, wobei das aus Zellulose bestehende Filtermedium von dem Partikelfilter umfasst ist, und wobei auf der von diesem abgewandten Seite des Cellulose-Filtermediums ein weiteres Stützrohr angeordnet ist. Demgemäß sind bei der bekannten Lösung beide Filterelemente auf ihren einander gegenüberliegenden Stirnseiten jeweils von einer gemeinsamen Endkappe aufgenommen, so dass jeweils nur eine kopf- und fußseitig vorhandene Endkappe beide Elemente gemeinsam aufnimmt, indem das jeweilige Filtermedium respektive Elementmaterial mit den Endkappen über ein Klebstoffbett fest verbunden ist. Demgemäß ist immer nur die gemeinsam aus beiden Filterelementen bestehende Baueinheit im Verbrauchsfall gemeinsam gegen eine neue Baueinheit tauschbar.

Ferner ist ein Filtergehäuse bekannt, das einen Aufnahmeraum für den Filter aufweist mit mehreren Fluidanschlussstellen, wobei der Aufnahmeraum zumindest teilweise von einer Aufnahmestange durchgriffen ist, auf die zentrisch der Filter aufsetzbar ist, welcher über seine eine kopfseitige Endkappe und eine zusätzliche Festlegeeinrichtung an der Stange in wiederlösbarer Weise festlegbar ist.

Ausgehend von diesem Stand der Technik liegt der Erfindung die Aufgabe zugrunde die bekannte Filterlösung unter Beibehalten ihrer Vorteile weiter zu verbessern, insbesondere die Herstellung solcher Filter zu erleichtern.

Eine dahingehende Aufgabe löst ein Filter mit den Merkmalen des Patentanspruches 1 in seiner Gesamtheit.

Gemäß dem kennzeichnenden Teil des Patentanspruches 1 besteht eine wesentliche Besonderheit der Erfindung darin, dass die beiden Filterelemente mittels einer Gewindeverbindung miteinander verbunden sind. Dergestalt ist es in der Art eines Baukastens fertigungstechnisch besonders einfach, vorkonfektionierte Filterelemente miteinander in einer Baueinheit zu kombinieren. So kann beispielsweise eine Art gleich aufgebauter Filterelemente mit einem anderen Filterelement der einen oder mindestens einer weiteren Art miteinander auf einfache Weise zu der Baueinheit über die Gewindeverbindung zusammengefasst werden, was die Herstellkosten senken hilft. Auch hat es sich in der Praxis gezeigt, dass es aus fertigungstechnischen Gründen heraus häufig schwierig ist, zwei verschiedene Filterelemente gleichzeitig und gemeinsam fuß- und kopfseitig jeweils mit einer gemeinsamen Endkappe, wie im Stand der Technik aufgezeigt, miteinander zu verbinden, und zwar unabhängig davon, ob die Filtermedien in die zugeordneten Endkappen eingeklebt oder mit diesen verschweißt werden, beispielsweise unter Einsatz eines Spiegel-, Laser- oder Ultraschallschweißverfahrens. Eine Aufteilung der Filtermedien in zwei zunächst voneinander separierte Filterelemente, die mittels einer Gewindeverbindung zu einer Baueinheit verbindbar sind, stellt eine praktikabel durchzuführende, kostengünstige Verbindungslösung dar. Dergestalt können die beiden Filterelemente einer Baueinheit jeweils einzeln und auch räumlich getrennt voneinander gefertigt werden, um dann später an einer anderen Fertigungsstation über die Gewindeverbindung die gemeinsame Baueinheit als Handelsgut auszubilden. Bevorzugt ist eine Durchströmung der beiden Filterelemente von innen nach außen vorgesehen. Es besteht aber ebenso auch die Möglichkeit einer Durchströmung von außen nach innen.

Bei einer vorteilhaften Ausführungsform des erfindungsgemäßen Filters ist vorgesehen, dass das jeweilige Filterelement mindestens eine Endkappe aufweist, die eine Gewindestrecke als Teil der Gewindeverbindung aufweist, die mit einer zugehörigen Gewindestrecke als weiteren Teil der Gewindeverbindung verschraubbar ist und dass die zugehörige Gewindestrecke Teil einer weiteren Endkappe ist. Dergestalt lassen sich unterschiedliche Gewindestrecken als gemeinsamer Bestandteil der jeweils herzustellenden Gewindeverbindung an der jeweiligen Endkappe anbringen, die sich aufgrund ihrer Gewindeflanken unterteilen lässt in Flachgewinde, Rundgewinde, Sägengewinde, Spitzgewinde, Trapezgewinde, Withworth-Gewinde etc.

Bei einer weiteren vorteilhaften Ausführungsform des erfindungsgemäßen Filters ist vorgesehen, dass in seiner Betriebsstellung die Gewindeverbindung am fußseitigen Ende beider Filterelemente und konzentrisch zur Längsachse derselben angeordnet ist. Dergestalt lässt sich an zentraler Stelle im fußseitigen Bereich des Filters die Ankopplung mittels der Gewindeverbindung zwischen den Einzelkomponenten sprich den beiden Filterelementen herstellen, so dass Überbestimmungen im Rahmen der anzuwendenden Verbindungstechnik für den Erhalt der Baueinheit aus zwei Filterelementen vermieden ist. Ferner erhöht die fußseitige Anordnung der Gewindeverbindung die Stabilität des Filters und ist bauraumsparend in den Elementaufbau integriert. Vorzugsweise ist dabei vorgesehen, dass die Endkappe des ersten Filterelementes als Gewindestrecke ein Außengewinde trägt und die Endkappe des zweiten Filterelementes als zugehörige Gewindestrecke ein Innengewinde aufweist.

Bei einer besonders bevorzugten Ausführungsform des erfindungsgemäßen Filters ist vorgesehen, dass die eine Endkappe des ersten Filterelementes einen Rohrstutzen mit dem Außengewinde aufweist, an dem sich innenumfangsseitig ein Endbereich des einen Filtermediums abstützt, das vorzugsweise von einem fluiddurchlässigen Stützkörper umfasst ist. Ferner ist vorteilhaft vorgesehen, das die andere Endkappe des zweiten Filterelementes einen weiteren Rohrstutzen mit dem Innengewinde aufweist, an dem sich außenumfangsseitig ein zum ersten Endbereich des einen Filtermediums benachbarter Endbereich des zweiten Filtermediums außenumfangsseitig abstützt, das vorzugsweise von einem weiteren fluiddurchlässigen Stützkörper umfasst ist. Aufgrund der jeweils eingesetzten Rohrstutzen ergibt sich eine sichere Anlage- respektive Abstützfläche für zuordenbare Stützkörper nebst Filtermedien, was zur Erhöhung der Druckstabilität des Filters als Ganzes im Betrieb dient.

Bei einer weiteren bevorzugten Ausführungsform des erfindungsgemäßen Filters ist vorgesehen, dass das jeweilige Gewinde der Gewindeverbindung bei gleicher Gewindesteigung eingängig ist. Dergestalt ist ein besonders einfacher Aufbau für die Gewindeverbindung erreicht, bei gleichzeitig hoher Stabilität.

Bei einer weiteren besonders bevorzugten Ausführungsform des erfindungsgemäßen Filters ist vorgesehen, dass die jeweilige Gewindestrecke aus einem Trapezgewinde gebildet ist, das nach Herstellen der Gewindeverbindung selbsthemmend und/oder selbstabdichtend konzipiert eine Trapezform besitzt, die vorzugsweise im Querschnitt gesehen die Form eines gleichschenkligen Trapezes aufweist. Für den Erhalt einer selbsthemmenden und selbstabdichtenden Gewindeverbindung hat sich das Trapezgewinde als kostengünstig zu realisierende Gewindelösung besonders bewährt.

Bei einer weiteren bevorzugten Ausführungsform des erfindungsgemäßen Filters ist vorgesehen, dass die Endkappe des ersten Filterelementes fußseitig im Durchmesser gegenüber dem Rohrstutzen eine verbreiterte Anlagefläche aufweist, auf die die andere Endkappe des zweiten Filterelementes bei hergestellter Gewindeverbindung zumindest teilweise flächig und vorzugsweise überstandsfrei aufgesetzt ist. Neben einer Montagehilfe bei der Herstellung der Gewindeverbindung über die genannte verbreiterte Anlagefläche der einen Endkappe, lässt sich dergestalt auch ein Spiel- oder Toleranzausgleich beim Herstellen der Gewindeverbindung erreichen, insbesondere wenn zwischen die beiden benachbarten Endkappen im Bereich der Anlagefläche ein flexibel nachgiebiges Dichtmedium, wie beispielsweise ein Flach-Dichtring, eingesetzt ist. Auch kann in besonders vorteilhafter Weise die Endkappe des zweiten Filterelementes auf ihrer Unterseite und als einstückiger Teil derselben, anstelle eines eigenständigen Flach-Dichtringes, auch mindestens einen in Richtung der anderen Endkappe vorstehenden Dichtring aufweisen mit entsprechender Dichtgeometrie.

Es genügt die erfindungsgemäße Gewindeverbindung nur auf einer Seite des Filters vorzusehen, so dass die beiden Filterelemente in vorteilhafter Weise kopfseitig je mit einer zusätzlichen Abschlusskappe als der üblichen Endkappe stirnseitig versehen sein können.

Für einen strömungstechnisch günstigen Aufbau hat es sich als vorteilhaft erwiesen, wenn die Abschlusskappe des zweiten Filterelementes die Abschlusskappe des ersten Filterelementes kopfseitig übergreift, wobei zwischen den beiden Abschlusskappen ein Abstandsraum gebildet ist, der randseitig in den Strömungsraum zwischen den beiden Filterelementen übergeht. Insbesondere, wenn ein solcher Filter als zweistufiger Entgasungsfilter konzipiert sein sollte, ergibt sich über die kopfseitige Verbindung von Teilen des Strömungsraumes über den Abstandsraum ein verbesserter Gasblasenaustrag.

Im Folgenden wird der erfindungsgemäße Filterlösung anhand einer Ausführungsform nach der Zeichnung näher erläutert. Dabei zeigen in prinzipieller und nicht maßstäblicher Darstellung die
- Figur 1: in der Art eines Längsschnittes den Filter als Ganzes;
- Figuren 2 und 3: zu der Figur 1 vergleichbare Längsschnitte betreffend das erste innere Filterelement bzw. das zweite äußere Filterelement; und
- Figur 4: eine vergrößerte Darstellung der fußseitigen Gewindeverbindung zwischen den beiden Filterelementen gemäß der Darstellung nach der Figur 1.

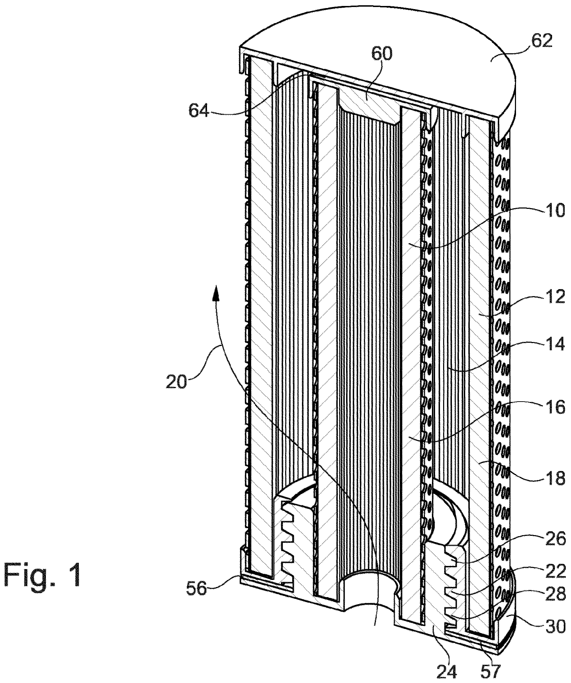

Der in Figur 1 in einem Längsschnitt gezeigte Filter dient zur Behandlung von Fluiden jedweder Art. Der Filter weist ein erstes Filterelement 10 sowie ein zweites Filterelement 12 auf, das das erste Filterelement 10 unter Bildung eines Strömungsraumes 14 mit einem vorgebbaren radialen Abstand umfasst. Jedes Filterelement 10, 12 weist ein Filtermedium 16 bzw. 18 auf, die bevorzugt von innen nach außen von dem Fluid in einer Durchströmungsrichtung durchströmbar sind, die in Figur 1 mit einem Pfeil 20 wiedergegeben ist. Wie ferner die Figur 1 zeigt, sind die beiden genannten Filterelemente 10, 12 mittels einer Gewindeverbindung 22, vorzugsweise in wiederlösbarer Weise, miteinander verbunden.

Der in Figur 1 gezeigte Filter kann beispielsweise zur Behandlung von Prozessfluid verwendet werden, wie es insbesondere bei der Wasserstoffelektrolyse entsteht und dient dabei vorzugsweise dem Abscheiden von Wasserstoff und/oder Sauerstoff aus dem Prozesswasser. Auch ein sonstiger Gasblasenaustrag aus einer Flüssigkeit ist möglich. Bei einer anderen Anwendungsmöglichkeit kann vorgesehen sein das Filtermedium 16 des ersten Filterelementes 10 aus Cellulosematerial aufzubauen, das dem Abtrennen von Wasser aus Hydraulikölen als dem zu behandelnden Fluid dient und die Wassertropfen im Wasser-Öl-Gemisch werden vom Volumen her vergrößert, die dann aufgrund des Dichteunterschiedes zwischen Wasser und Öl unter der Wirkung der Schwerkraft absinken und das derart entstehende Wasser kann aus einer zugehörigen Filtervorrichtung abgeführt werden. Vorzugsweise ist dabei das aus Cellulose bestehende Filtermedium plissiert ebenso wie ein Partikelfilter, der das zweite Filterelement 12 bildet, dessen Filterfalten eine größere Packungsdichte aufweisen und eine größere Faltenhöhe besitzen als die Filterfalten des ersten Filtermediums 16 aus Cellulosematerial. Die vorstehend genannten Anwendungsmöglichkeiten für den erfindungsgemäßen Filter sind nur beispielhaft. Im Folgenden wird der erfindungsgemäße Filter jedoch für den Anwendungsfall beschrieben, dass Wasserstoff und/oder Sauerstoff aus Prozesswasser abzuscheiden ist, wie es insbesondere bei der Wasserstoffelektrolyse entsteht.

Das erste Filterelement 10 weist boden- oder fußseitig eine Endkappe 24 auf, die eine Gewindestrecke 26 als Teil der Gewindeverbindung 22 aufweist. Die dahingehende Gewindestrecke 26 ist mit einer zugehörigen Gewindestrecke 28 als weiteren Teil der Gewindeverbindung 22 verschraubbar, wobei diese zugehörige Gewindestrecke 28 Teil einer weiteren zweiten Endkappe 30 ist. In der in Figur 1 gezeigten üblichen Betriebsstellung des Filters ist mithin die Gewindeverbindung 22 am fußseitigen Ende beider Filterelemente 10, 12 und konzentrisch zur Längsachse derselben angeordnet.

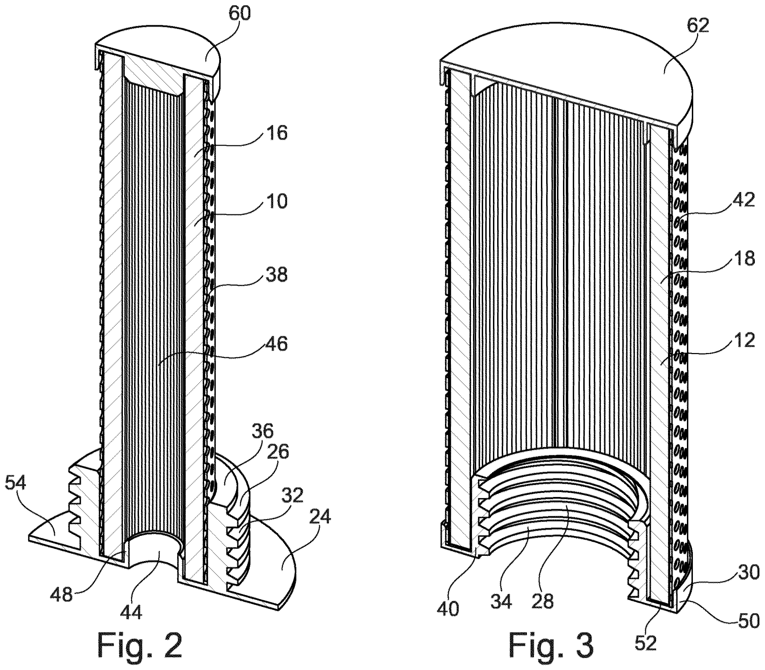

Wie weiter die Detailzeichnungen nach den Figuren 2 und 3 zeigen, weist die Endkappe 24 des ersten Filterelementes 10 als Gewindestrecke 26 ein Außengewinde 32 auf (Figur 2) und demgemäß ist die Endkappe 30 des zweiten Filterelementes 12 als zugehörige Gewindestrecke 28 mit einem Innengewinde 34 (Figur 3) versehen. Die eine Endkappe 24 des ersten Filterelementes 10 weist einen Rohrstutzen 36 mit dem Außengewinde 32 auf, an dem sich innenumfangsseitig der untere Endbereich des einen Filtermediums 16 abstützt, das vorzugsweise von einem fluiddurchlässigen, rohrförmigen Stützkörper 38 umfasst ist. Die andere Endkappe 30 des zweiten Filterelementes 12 weist gleichfalls einen weiteren Rohrstutzen 40 mit dem Innengewinde 34 auf, an dem sich außenumfangsseitig ein zum ersten Endbereich des einen Filtermediums 16 benachbarter Endbereich des zweiten Filtermediums 18 außenumfangsseitig abstützt, das vorzugsweise von einem weiteren fluiddurchlässigen Stützkörper 42 in Form eines Stützrohres umfasst ist. Der jeweilige Stützkörper 38, 42 ist als hohlzylindrischer Körper ausgebildet mit kreisrunden Durchgangslöchern als Perforation. Ferner umgreifen die beiden Stützkörper 38, 42 jeweils außenumfangsseitig das in Durchströmungsrichtung 20 gesehen davorliegende Filtermedium 16 bzw. 18. Im Bedarfsfall, insbesondere auch bei einer Durchströmungsrichtung von außen nach innen, können die Filtermedien 16, 18 auch jeweils innenumfangsseitig abgestützt sein.

Die beiden Endkappen 24 und 30 sind insbesondere aus Kunststoffmaterialen bestehend ausgebildet und das jeweilige Gewinde 32, 34 ist bei gleicher Gewindesteigung eingängig und einstückiger Bestandteil der jeweiligen Endkappe 24, 30. Die Steigung des jeweiligen Gewindes 32, 34 erlaubt mehrere Umdrehungen bis die Gewindeverbindung 22 vollständig hergestellt oder wiedergelöst worden ist. Wird der gezeigte Filter als sogenannte In-Tank-Lösung eingesetzt, erfolgt der Zustrom von dem zu behandelnden Fluid über einen weiteren dritten Rohrstutzen 44, der in einen hohlzylindrischen Innenraum 46 des ersten Filterelementes 10 vorsteht und im fußseitigen Bereich eine Abstützung des ersten Filtermediums 16 nach innen hin bietet. Der dritte Rohrstutzen 44 ist wiederum einstückiger Bestandteil der ersten Endkappe 24 und von seiner axialen Baulänge her kürzer ausgebildet als der nach außen hin umlaufende erste Rohrstutzen 36. Die Außenwand des dritten Rohrstutzens 44 bildet mit der benachbarten konzentrischen Innenwand des ersten Rohrstutzens 36 eine Art Aufnahmenut 48 für die Aufnahme eines Klebstoffbettes aus, mittels dem sich das untere Ende des ersten Filterelementes 10, bestehend aus dem ersten Filtermedium 16 und dem ersten Stützkörper 38, an der ersten Endkappe 24 festlegen lässt. Insbesondere wenn alle eingesetzten Komponenten aus geeigneten Kunststoffmaterialien bestehen, lässt sich die Verbindung zwischen der Endkappe 24 und den sonstigen Komponenten des ersten Filterelementes 10 auch mittels eines Spiegel-, Laser- oder Ultraschallschweißverfahrens durchführen. Geeignete Verbindungsverfahren mittels Laser unter Einsatz laserdurchlässiger Materialien sind unter anderem in DE 10 2007 013 1 78 A1 und DE 10 2010 005 541 A1 offenbart.

Entsprechend ist eine Verbindung zwischen der zweiten Endkappe 30 mit dem zweiten Filtermedium 18 nebst zweitem Stützkörper 42 hergestellt, wobei diesmal zusätzlich zu dem zweiten Rohrstutzen 40 gemäß der Darstellung nach der Figur 3 ein nach oben vorkragender Endkappenrand 50 vorgesehen ist, der bei geringer axialer Baulänge gegenüber dem inneren Rohrstutzen 40 zusammen mit diesem wiederum fußseitig eine weitere Aufnahmenut 52 für die Aufnahme eines Klebstoffbettes ausbildet. Auch hier sind wiederum Schweißverbindungsverfahren denkbar, sofern geeignete Materialpaarungen zum Einsatz kommen. Wie sich des Weiteren aus den Figuren ergibt, ist die jeweilige Gewindestrecke 26, 28 aus einem Trapezgewinde gebildet, das nach Herstellen der Gewindeverbindung 22 selbsthemmend und vorzugsweise selbstabdichtend konzipiert eine Trapezform besitzt, die vorzugsweise im Querschnitt gesehen die Form eines gleichschenkligen Trapezes aufweist. Insbesondere kommt hier ein Gewinde der Form Tr 100 x 12 zum Einsatz.

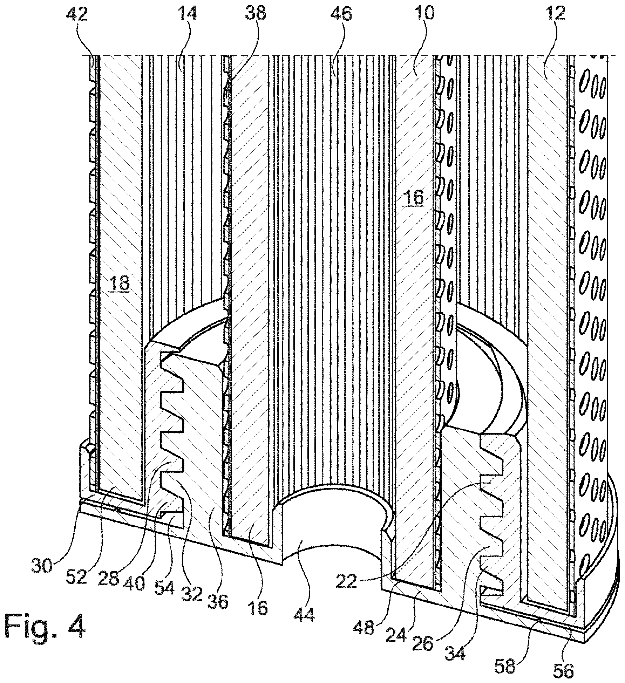

Die Endkappe 24 des ersten Filterelementes 10 ist fußseitig im Durchmesser gegenüber dem Rohrstutzen 36 mit einer im Durchmesser verbreiterten Anlagefläche 54 versehen, auf die die andere Endkappe 24 des zweiten Filterelementes 12 bei hergestellter Gewindeverbindung 22 von der Bodenseite her zumindest teilweise flächig und gemäß der Darstellung nach der Figur 1 überstandsfrei aufgesetzt ist. Sofern die Gewindeverbindung 22 selbstabdichtend ist, brauchen keine weiteren Abdichtungsmaßnahmen vorgenommen werden. In jedem Fall besteht die Möglichkeit in einem umlaufenden Ringabstand 56 zwischen der Oberseite der Anlagefläche 54 und der Unterseite der zweiten Endkappe 30 eine Flachdichtung 57 (Figur 1) einzubringen, vorzugsweise aus einem elastomeren Dichtungsmaterial bestehend. Alternativ zu dieser Ausgestaltung kann auch gemäß der Darstellung nach der Figur 4 die Anlagefläche 54 auf ihrer Oberseite mit einem umlaufenden Dichtring 58 versehen sein, mit im Querschnitt gesehen spitz zulaufender Dichtgeometrie, welche die Abdichtung zwischen den beiden Endkappen 24 und 30 vornimmt. Entsprechnde Dichtgeometrien können auch auf der Unterseite der zweiten Endkappe 30 angeordnet sein.

Wie ferner die Figur 4 zeigt, schließen die beiden Trapezgewinde die entlang den beiden Rohrstutzen 36 bzw. 40 geführt sind an ihrer Oberseite im Wesentlichen bündig miteinander ab, was ebenso für den unteren Gewindebereich 22 gilt. Anstelle des in den Figuren gezeigten Trapezgewindes kann auch ein Rundgewinde zum Einsatz kommen, dessen einzelne Gewindeflanken in einer fiktiven Verlängerung einen Flankenwinkel von 60° miteinander einschließen, wobei der Radius der jeweiligen Gewinderundung im kopfseitigen Bereich eines Gewindeganges größer ist als der Radius im zugeordneten fußseitigen Bereich des Rundgewindes. Dergestalt ist eine sichere Gewindeverbindung erreicht und ansonsten im Betrieb auftretende Kerbwirkungen sind dergestalt deutlich reduziert, so dass ungewollte Ermüdungsbrüche vermieden sind.

Wie sich des Weiteren aus der Figur 2 ergibt, ist das erste Filterelement 10 auf seiner Kopfseite mit einer Abschlusskappe 60 versehen, die wiederum eine nutförmige Aufnahme ausbildet zwecks Aufnahme des oberen Endes von erstem Filtermedium 16 mit erstem Stützkörper 38. Die Abschlusskappe 60 weist hierfür sowohl außenumfangsseitig als auch innenumfangsseitig jeweils eine nach unten vorstehende Randkappengeometrie auf, mit der Möglichkeit der Abstützung des ersten Filtermediums 16 mit erstem Stützkörper 38 sowohl nach außen als auch nach innen hin. Eine entsprechend konzipierte Abschlusskappe 62 ist gemäß der Darstellung nach der Figur 3 für das zweite Filterelement 12 vorgesehen. Auch die dahingehenden Abschlusskappen 60, 62 lassen sich wiederum mittels einer Klebstoffverbindung oder eines Schweißverfahrens unter Bildung des jeweiligen Filterelementes 10, 12 festlegen. Schraubt man nun das Filterelement 12 nach der Figur 3 auf das erste Filterelement 10 nach der Figur 2 auf, kommt die Gewindeverbindung 22 zustande, wie sie in der Figur 4 vergrößert dargestellt ist unter Bildung der Filter-Baueinheit nach der Figur 1. Zwischen den Abschlusskappen 60, 62 ist ein Abstandsraum 64 gebildet, der den Strömungsraum 14 kopfseitig für einen verbesserten Gasblasenaustrag verbindet.

Obwohl das innere, erste Filtermedium 16 plissiert dargestellt ist, soll für die Beschreibung des vorliegenden Ausführungsbeispiels das erste Filtermedium 16 aus einer voluminösen Meltblown-Tiefenfilterkerze aus Polypropylen gebildet sein. Die Filterfeinheit der Tiefenfilterkerze liegt bevorzugt zwischen 10 *µ*m und 200 *µ*m; ersatzweise kann für einen zweistufigen Entgasungsfilter hier aber auch ein nicht näher dargestellter Sinterfilter mit gleicher Filterfeinheit zum Einsatz kommen. Die äußere Filterstufe mit dem zweiten Filtermedium 18 soll hingegen aus einem dreilagigen, plissierten Aufbau aus Polypropylen-Gewebe bestehen. Vorzugsweise liegt dabei die Maschenweite der beiden äußeren Lagen, die dem zweiten Stützkörper 42 zugewandt sind, bei etwa 200 bis 1000 *µ*m, was relativ grob ist. Demgegenüber liegt die Maschenweite der inneren Lage bei 0,1 bis 500 *µ*m, was als relativ fein bezeichnet werden kann. Die Faltendichte der plissierten Filtermatte, die insoweit das zweite Filtermedium 18 ausbildet, liegt bei 0,1 bis 6 Falten pro Zentimeter.

Neben dem angesprochenen Werkstoff Polypropylen können als weitere Kunststoffmateriealien für die Herstellung Polyamid oder Polyester zum Einsatz kommen. Sofern für alle Komponenten der Baueinheit ein- und dasselbe Kunststoffmaterial zum Einsatz kommt, ist ein sortenreiner Aufbau erreicht, der das Recycling des Filters als Ganzes erleichtern hilft. Als Webarten für das zweite Filtermedium 18 können Köper- oder Atlasbindung zum Einsatz kommen, ebenso sogenannte Glattgewebe. Der Einsatz weiterer Webarten ist hier möglich. Neben dem beschriebenen dreilagigen Aufbau für das zweite Filterelement 12 besteht auch die Möglichkeit eines Aufbaus mit 2 bis 5 Lagen, wobei vorzugsweise die Maschenweite in Durchströmungsrichtung 20 gesehen von grob nach fein zu erfolgen hat.

Das über den dritten Rohrstutzen 44 in den Innenraum 46 einströmende Fluid fließt entlang der Durchströmungsrichtung 20 von innen nach außen durch die Baueinheit nach der Figur 1. In Durchströmungsrichtung 20 bildet dabei das erste Filtermedium 16 eine erste Entgasungsstufe im Rahmen des ersten Filterelementes 10 aus, die der Vergrößerung von Gasblasen durch Koaleszenz und dem Entfernen derselben aus dem Prozessfluid durch auftriebsbedingtes Abscheiden dient. Das in Durchströmungsrichtung 20 gesehen nachfolgende weitere Filtermedium 18 als Teil des zweiten Filterelementes 12 bildet demgemäß eine zweite Entgasungsstufe aus, die dem Entfernen von im Prozessfluid verbleibenden, feinstverteilten Gasblasen wiederum durch Koaleszenz und dem Abscheiden derselben durch auftriebsbedingtes Aufsteigen dient, wobei vermehrt Gasblasen innerhalb des Strömungsraumes 14 von unten nach oben aufsteigen und sich dergestalt im Bereich der oberen Abschlusskappen 60, 62 ansammeln. Wird der Filter wie angegeben innerhalb eines nicht näher dargestellten Tanks oder Behälters eingesetzt und ragen die beiden Abschlusskappen 60, 62 über ein im Tank oder Behälter vorhandenes Fluidniveau kopfseitig nach oben hinaus, kann über den oberen Freiraum des Filters der Gasaustritt oberhalb des Flüssigkeitsniveaus in den Tank oder Behälter erfolgen.

Anstelle der Verwendung des Filters als zweistufiger Entgasungsfilter können hier natürlich auch wie bereits dargelegt andere Filtrationsaufgaben mit dem Filter bewältigt werden, beispielsweise in Form einer kaskadierten Partikelfiltration oder im Rahmen der bereits beschriebenen Entwässerung oder im Rahmen einer Schlamm-Varnish-Abscheidung.

## Patentansprüche

1. Filter zur Behandlung von Fluiden, mit einem ersten Filterelement (10) und mit einem zweiten Filterelement (12), das das erste Filterelement (10) unter Bildung eines Strömungsraumes (14) mit einem vorgebbaren radialen Abstand umfasst, wobei jedes Filterelement (10, 12) ein Filtermedium (16, 18) aufweist, die von dem Fluid in einer vorgebbaren Durchströmungsrichtung (20) durchströmbar sind, **dadurch gekennzeichnet, dass** die beiden Filterelemente (10, 12) mittels einer Gewindeverbindung (22) miteinander verbunden sind.

2. Filter nach Anspruch 1, **dadurch gekennzeichnet, dass** das jeweilige Filterelement (10) mindestens eine Endkappe (24) aufweist, die eine Gewindestrecke (26) als Teil der Gewindeverbindung (22) aufweist, die mit einer zugehörigen Gewindestrecke (28) als weiteren Teil der Gewindeverbindung (22) verschraubbar ist und dass die zugehörige Gewindestrecke (28) Teil einer weiteren Endkappe (30) ist.

3. Filter nach Anspruch 1 oder 2, **dadurch gekennzeichnet, dass** in seiner Betriebsstellung die Gewindeverbindung (22) am fußseitigen Ende beider Filterelemente (10, 12) und konzentrisch zur Längsachse derselben angeordnet ist.

4. Filter nach einem der vorstehenden Ansprüche, **dadurch gekennzeichnet, dass** die Endkappe (24) des ersten Filterelementes (10) als Gewindestrecke (26) ein Außengewinde (32) trägt und die Endkappe (30) des zweiten Filterelementes (12) als zugehörige Gewindestrecke (28) ein Innengewinde (34) aufweist.

5. Filter nach einem der vorstehenden Ansprüche, **dadurch gekennzeichnet, dass** die eine Endkappe (24) des ersten Filterelementes (10) einen Rohrstutzen (36) mit dem Außengewinde (32) aufweist, an dem sich innenumfangsseitig ein Endbereich des einen Filtermediums (16) abstützt, das vorzugsweise von einem fluiddurchlässigen Stützkörper (38) umfasst ist.

6. Filter nach einem der vorstehenden Ansprüche, **dadurch gekennzeichnet, dass** die andere Endkappe (30) des zweiten Filterelementes (12) einen weiteren Rohrstutzen (40) mit dem Innengewinde (34) aufweist, an dem sich außenumfangsseitig ein zum ersten Endbereich des einen Filtermediums (16) benachbarter Endbereich des zweiten Filtermediums (18) außenumfangsseitig abstützt, das vorzugsweise von einem weiteren fluiddurchlässigen Stützkörper (42) umfasst ist.

7. Filter nach einem der vorstehenden Ansprüche, **dadurch gekennzeichnet, dass** das jeweilige Gewinde (32, 34) der Gewindeverbindung (22) bei gleicher Gewindesteigung eingängig ist.

8. Filter nach einem der vorstehenden Ansprüche, **dadurch gekennzeichnet, dass** die jeweilige Gewindestrecke (26, 28) aus einem Trapezgewinde gebildet ist, das nach Herstellen der Gewindeverbindung (22) selbsthemmend und/oder selbstabdichtend konzipiert eine Trapezform besitzt, die vorzugsweise im Querschnitt gesehen die Form eines gleichschenkligen Trapezes aufweist.

9. Filter nach einem der vorstehenden Ansprüche, **dadurch gekennzeichnet, dass** die Endkappe (24) des ersten Filterelementes (10) fußseitig im Durchmesser gegenüber dem Rohrstutzen (36) eine verbreiterte Anlagefläche (54) aufweist, auf die die andere Endkappe (24) des zweiten Filterelementes (12) bei hergestellter Gewindeverbindung (20) zumindest teilweise flächig und vorzugsweise überstandsfrei aufgesetzt ist.

10. Filter nach einem der vorstehenden Ansprüche, **dadurch gekennzeichnet, dass** die Endkappe (30) des zweiten Filterelementes (12) auf ihrer Unterseite und als einstückiger Teil derselben mindestens einen Dichtring (58) aufweist.

11. Filter nach einem der vorstehenden Ansprüche, **dadurch gekennzeichnet, dass** die beiden Filterelemente (10, 12) kopfseitig je mit einer Abschlusskappe (60, 62) stirnseitig versehen sind.

12. Filter nach einem der vorstehenden Ansprüche, **dadurch gekennzeichnet, dass** die Abschlusskappe (62) des zweiten Filterelementes (12) die Abschlusskappe (16) des ersten Filterelementes (10) übergreift und dass zwischen den beiden Abschlusskappen (60, 62) ein Abstandsraum (64) gebildet ist, der randseitig in den Strömungsraum (14) übergeht.
